# FASCICULE DE BREVET EUROPEEN

(11) **EP 2 445 186 B1**
(45) Date de publication et mention de la délivrance du brevet: **04.12.2013**
(21) Numéro de dépôt: 11184611.9
(22) Date de dépôt: 11.10.2011
(51) Int. Cl.: H04M 3/46, H04M 1/725, H04M 1/57

(54) **Procédé et système de traitement d'un appel entrant et programme d'ordinateur**
Verfahren und System zur Verarbeitung eines eingehenden Anrufs, und Computerprogramm
Method and system for processing an incoming call and computer program

(30) Priorité: 22.10.2010 FR 1058685
(43) Date de publication de la demande: 25.04.2012
(73) Titulaire: Orange, 75015 Paris (FR)
(72) Inventeur: Baranski, Fabrice, 35000 RENNES (FR)
(74) Mandataire: Regimbeau

(56) Documents cités:
- US-A1- 2008 205 414
- US-B1- 6 314 124

## Description

La présente invention concerne un procédé de traitement d'un appel entrant.

Il est fréquent qu'un utilisateur possède deux terminaux, chaque terminal étant associé à un numéro d'abonné différent.

Par exemple, un utilisateur d'un terminal mobile associé à un premier numéro d'abonné ou numéro de mobile, peut disposer également d'un terminal fixe associé à un second numéro d'abonné ou numéro de ligne, par exemple à son domicile ou à son poste de travail.

Le document US2008/0205414 A1 décrit un dispositif pour réacheminer une communication d'un premier dispositif de communication à un second dispositif de communication comprenant un circuit de reroutage ainsi qu'une méthode correspondante.

Parfois, l'utilisateur reçoit des appels sur le terminal mobile alors qu'il se trouve à proximité du terminal fixe ou vice-versa.

Ainsi, l'utilisateur perd de l'aisance et du temps pour décrocher le terminal recevant un appel, et peut même manquer des appels entrants, alors qu'il peut avoir l'autre terminal à proximité.

Afin d'améliorer le service rendu à l'utilisateur au vu des inconvénients précités, la présente invention propose un procédé de traitement d'un appel entrant.

Selon l'invention, lorsqu'un premier terminal associé à un premier numéro d'abonné reçoit un appel entrant, au moins un second terminal associé à un second numéro d'abonné différent du premier numéro reçoit une commande d'émission d'un signal identifiant l'appel entrant, de sorte que le premier et au moins le second terminal émettent simultanément un signal identifiant ledit appel entrant.

Ainsi, un utilisateur est averti de la réception d'un appel entrant par au moins deux terminaux et a le choix de répondre à cet appel entrant avec le premier et au moins le second terminal.

L'utilisateur répond ainsi rapidement et avec plus d'aisance à l'appel entrant.

Dans un exemple, à un terminal correspond une liste de contacts, et le second terminal met en oeuvre la commande d'émission d'un signal identifiant l'appel entrant si l'appel entrant provient d'un utilisateur faisant partie d'au moins une liste de contacts associée à un premier terminal et/ou un second terminal.

Ainsi, l'utilisateur reconnaît lorsque l'appel entrant provient d'un expéditeur dans sa liste de contacts.

Par exemple, la commande d'émission est émise par le premier terminal.

Alternativement, la commande est émise par le second terminal.

Selon encore une variante, la commande d'émission est émise par des moyens de gestion du premier terminal ou du second terminal.

Par exemple, lorsque le second terminal accepte l'appel entrant, l'appel entrant dans ledit premier terminal est transféré vers le second terminal, et le premier terminal finalise l'émission d'un signal identifiant l'appel entrant.

Au contraire, lorsque le premier terminal accepte l'appel entrant, le second terminal finalise l'émission d'un signal identifiant l'appel entrant.

L'invention propose également un système de traitement d'un appel entrant dans un premier terminal associé à un premier numéro d'abonné, comportant des moyens de mise en oeuvre, dans au moins un second terminal associé à un second numéro d'abonné différent du premier numéro d'abonné, d'une commande d'émission d'un signal identifiant le signal entrant, de sorte que le premier et au moins le second terminal émettent simultanément un signal identifiant l'appel entrant.

L'invention propose en outre un programme d'ordinateur comprenant des instructions pour la mise en oeuvre du procédé selon l'invention lorsque ce programme est exécuté par un processeur.

Ce système et ce programme peuvent d'ailleurs présenter les caractéristiques optionnelles énoncées précédemment en termes de procédé.

D'autres caractéristiques et avantages de l'invention ressortiront de la description qui suit, faite en référence aux dessins annexés dans lesquels :
- la figure 1 illustre un exemple de contexte dans lequel l'invention peut être mise en oeuvre;
- la figure 2 représente un exemple de procédé conforme à un mode de réalisation de l'invention ;
- la figure 3 représente un exemple de procédé conforme à un second mode de réalisation de l'invention ; et
- les figures 4a et 4b représentent des échanges entre un premier et un second terminal conformément aux enseignements de l'invention.

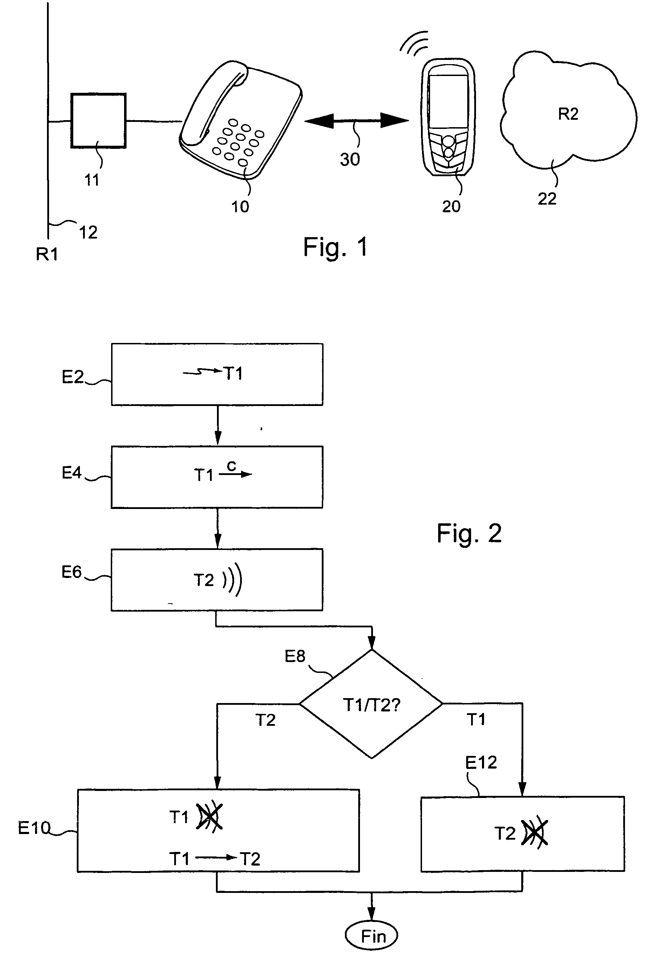

La figure 1 représente un exemple de contexte dans lequel un premier terminal est un terminal fixe 10 connecté à un premier réseau 12. Ce premier réseau 12 est par exemple le réseau téléphonique commuté (RTC), ou un réseau mettant en oeuvre des techniques de voix sur IP (VoIP).

Dans cet exemple, le premier terminal 10 est connecté au premier réseau 12 à travers des moyens de gestion 11 de ce premier terminal 10.

Ce premier terminal 10 est associé à un premier numéro d'abonné ou numéro de ligne.

Un deuxième terminal 20 est ici un terminal mobile. Ce terminal mobile 20 est associé à un second numéro d'abonné différent du premier numéro d'abonné, ou numéro de mobile.

Le numéro d'abonné est un numéro permettant d'identifier l'abonné destinataire de l'appel.

Le terminal mobile 20 est un téléphone cellulaire apte à mettre en oeuvre une communication sans fil avec une station de base d'un réseau téléphonique 22 tel que par exemple le réseau GSM (Global System for Mobile).

Le premier terminal 10 et/ou les moyens de gestion 11, ainsi que le deuxième terminal 20 comportent des moyens de communication 30, adaptés à établir une communication entre les terminaux 10, 20 via une technologie sans fil, par exemple, par liaison radio courte distance, comme par exemple via la technologie radio « Bluetooth » (marque déposée).

Un second exemple de contexte (non représenté sur les figures) est le contexte représenté sur la figure 1 dans lequel le terminal fixe 10 est connecté directement au réseau 12.

Dans un autre contexte possible, le premier et le deuxième terminal sont des terminaux mobiles, ou encore le premier terminal est un terminal mobile et le deuxième un terminal fixe.

Le procédé conforme à l'invention peut également être mis en oeuvre dans un contexte dans lequel le nombre de terminaux est plus élevé.

Il peut par exemple exister un troisième et un quatrième terminal, ces terminaux étant mobiles ou fixes.

On va décrire ensuite à la figure 2 un procédé de traitement d'un appel entrant selon un premier mode de réalisation de l'invention.

Le procédé débute à l'étape E2 à laquelle le premier terminal 10 reçoit un appel entrant.

Suite à la réception de l'appel entrant grâce aux moyens de communication 30 entre les terminaux 10, 20, le premier terminal 10 émet une commande informant qu'il a reçu un appel entrant lors d'une étape E4.

Lors d'une étape E6, le second terminal 20 reçoit cette commande par des moyens de communication 30 entre les terminaux 10, 20 et met en oeuvre une commande d'émission d'un signal identifiant la réception de l'appel entrant. Ce signal identifiant un appel entrant peut être, par exemple, un signal sonore, lumineux ou mécanique (par exemple une vibration).

On notera que les étapes E4 et E6 sont réalisables que si les moyens de communication 30 permettent une communication entre le premier terminal 10 et le deuxième terminal 20.

Lors d'une étape E8, on vérifie lequel des deux terminaux 10 et 20 accepte l'appel entrant.

Si le second terminal 20 accepte l'appel entrant, dans notre exemple, le premier terminal 10 met fin à l'émission d'un signal identifiant ledit appel entrant, et l'appel entrant dans le premier terminal 10 est transféré vers le second terminal 20 lors d'une étape E10.

Ce transfert d'appel peut être effectué entre les réseaux 12, 22, c'est-à-dire que le premier réseau 12 transfère l'appel entrant dans le premier terminal 10 vers le second réseau 22.

Dans un autre exemple, le transfert est mis en oeuvre au moyen des moyens de communication 30 entre les terminaux 10, 20. Dans ce cas, le transfert correspond à un transfert ou réémission de la voix du premier terminal 10 vers le second terminal 20.

Dans le cas de terminaux 10, 20 communicant au moyen du protocole SIP (Session Initial Protocole), ou étant connectés à travers un réseau acceptant le protocole TCP/IP, par exemple Internet, permettant de mettre en oeuvre la voix sur réseau IP (VoIP, "Voice over IP"), le transfert est mis en oeuvre par les terminaux 10, 20.

Afin de mettre en oeuvre le transfert de l'appel, le terminal vers lequel l'appel est transféré (ici, le second terminal 20), émet une commande de transfert d'appel, par exemple la commande AT+CCFC suivie de son numéro d'abonné (ici, numéro mobile).

Si à l'étape E8, le premier terminal 10 accepte l'appel entrant, le second terminal 20 met fin à l'émission du signal identifiant l'appel entrant lors d'une étape E12.

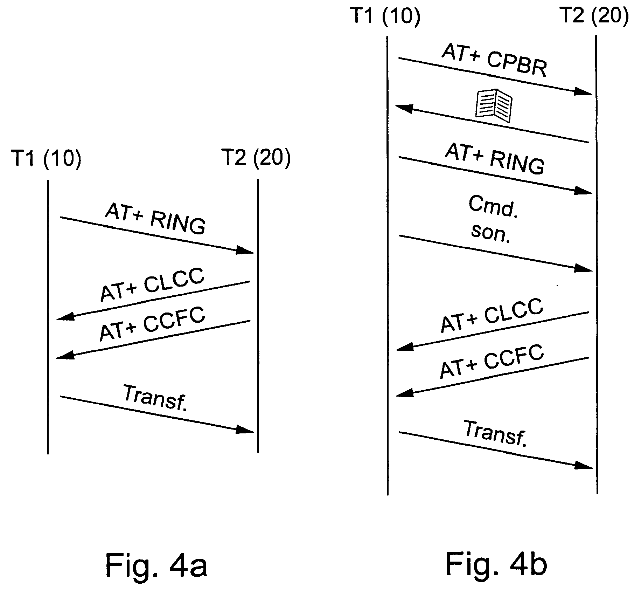

Un exemple illustrant les étapes E10 et E12 est représenté aux figures 4a et 4b.

Si ni le premier terminal 10, ni le second terminal 20 n'accepte l'appel entrant, les premier 10 et second 20 terminaux continuent à émettre le signal identifiant l'appel entrant jusqu'à la fin de l'appel de manière classique.

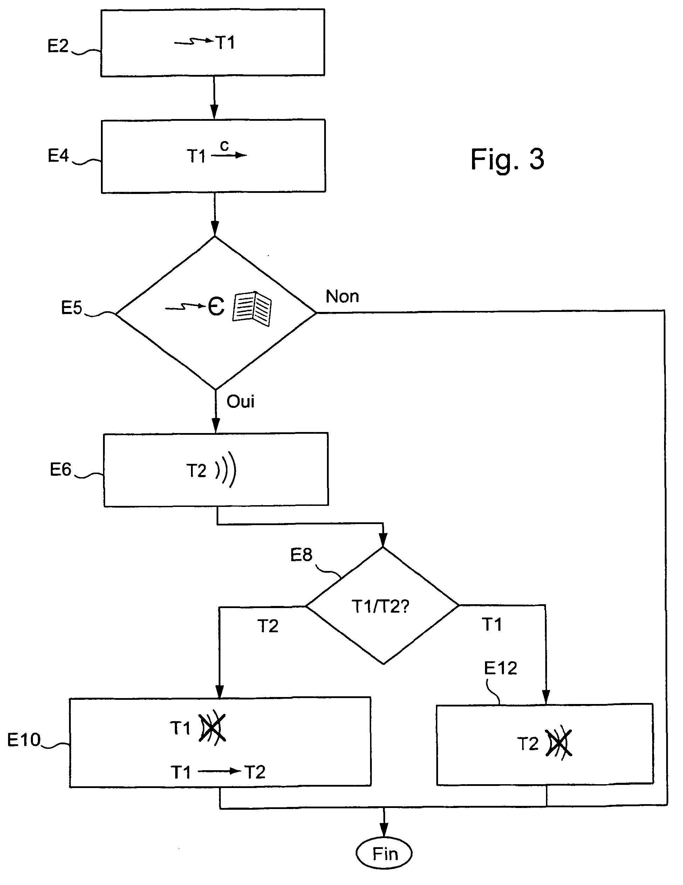

En référence à la figure 3, on va décrire un procédé de traitement d'un appel entrant selon un deuxième mode de réalisation.

Comme dans le premier mode de réalisation, lors d'une étape E2, le premier terminal 10 reçoit un appel entrant, et lors d'une étape E4, le premier terminal 10 émet une commande informant qu'il reçoit un appel entrant.

Lors d'une étape E5, on vérifie si l'appel entrant provient d'une entrée appartenant à la liste de contacts du premier 10 ou du second terminal 20.

Cette étape de vérification E5 peut être mise en oeuvre par le premier 10 ou par le second 20 terminal.

Selon un mode de réalisation, le premier terminal 10, ayant reçu, par exemple préalablement, la liste de contacts du second terminal 20, analyse si l'appel entrant provient d'un utilisateur faisant partie de la liste de contacts du second terminal 20.

Le premier terminal 10 peut également vérifier si l'utilisateur fait partie de sa liste de contacts.

Selon un autre mode de réalisation, le second terminal 20, ayant connaissance d'une réception d'un appel entrant par le premier terminal 10, vérifie si l'utilisateur émettant l'appel entrant fait partie de sa liste de contacts ou encore de celle du premier terminal 10.

Pour mettre en oeuvre l'étape de vérification, dans cet exemple, le premier 10 ou le second terminal 20 vérifie la présence dans la liste ou les listes de contacts, du numéro de téléphone de l'émetteur de l'appel entrant (numéro MS ISDN, de l'anglais « Mobile Station ISDN Number » dans le cas de téléphones mobiles).

Si l'appel entrant provient d'un utilisateur faisant partie d'une liste de contacts, le second terminal 20 met en oeuvre une commande d'émission d'un signal identifiant ledit appel entrant dans le premier terminal.

Au contraire, si l'appel entrant ne provient pas d'une entrée d'une liste de contacts du premier 10 ou second 20 terminal, le second terminal 20 ne met pas en oeuvre l'émission du signal identifiant un appel entrant, et seulement le premier terminal 10 indique la présence d'un appel entrant.

Selon encore un mode de réalisation, lors de l'étape de vérification E5, on vérifie que l'appel entrant provient d'un utilisateur présent à la fois dans la liste de contacts du premier terminal 10 et dans celle du deuxième terminal 20.

Suite à la vérification de l'origine de l'appel entrant à l'étape E5, on procède à l'étape E8 à laquelle on vérifie lequel parmi le premier 10 et le second terminal 20 accepte l'appel entrant.

Comme dans le cas décrit en référence à la figure 2, lorsque le second terminal 20 accepte l'appel entrant, le premier terminal 10 met fin à l'émission d'un signal identifiant l'appel entrant, et l'appel entrant dans le premier terminal 10 est transféré vers le second terminal 20.

Si à l'étape E8, le premier terminal 10 accepte l'appel entrant, le second terminal 20 met fin à l'émission du signal identifiant l'appel entrant lors d'une étape E12.

Dans un mode de réalisation, la commande d'émission d'un signal identifiant l'appel entrant mise en oeuvre par le second terminal 20 à l'étape E6, est émise par le premier terminal 10.

Ainsi, par exemple, lorsqu'il existe une vérification de la provenance de l'appel entrant (cas décrit en référence à la figure 3), le premier terminal peut vérifier la présence de l'émetteur de l'appel entrant dans sa liste de contacts et/ou la liste de contacts du second terminal 20, et émettre en conséquence une commande d'émission d'un signal identifiant l'appel entrant.

Néanmoins, il est possible que la commande soit émise par le second terminal ou encore par des moyens de gestion du premier ou du deuxième terminal, externes au premier ou deuxième terminal respectivement.

La figure 4a montre un exemple des échanges principaux entre le premier 10 et second 20 terminal dans le cadre du premier mode de réalisation de l'invention (figure 2). Ces échanges sont réalisés par des moyens de communication 30 entre les terminaux 10, 20.

Ainsi, les terminaux 10, 20 et les moyens de gestion 11 peuvent communiquer entre eux via une technologie sans fil comme décrit ci-dessus. Dans cet exemple, la communication est mise en oeuvre grâce à des commandes AT GSM.

Bien entendu, d'autres moyens de communication peuvent être mis en oeuvre. Par exemple, la communication peut être mise en oeuvre grâce à des commandes DECT ("*Digital Enhanced Cordless Telephone*") ou SIP ("*Session Initial Protocole*")*.*

Dans cet exemple, le premier terminal 10 (T1) est un terminal fixe et le second terminal 20 (T2) est un terminal mobile.

Lorsque le premier terminal 10 reçoit un appel entrant, il émet une commande représentative de la réception d'un appel entrant (commande "AT+RING" ou "AT+CRING").

Ici, le second terminal 20, recevant et reconnaissant cette commande, génère une commande d'émission du signal identifiant l'appel entrant.

Si le second terminal 20 accepte l'appel entrant ou décroche, il émet une commande représentative de cet événement, par exemple la commande "AT+ CLCC", ainsi qu'une commande de transfert d'appel, par exemple la commande "AT+ CCFC", suivie de son numéro d'abonné.

Ces commandes sont détectées par le premier terminal 10, lequel arrête l'émission du signal identifiant l'appel entrant, et transfère l'appel entrant vers le second terminal 20.

La figure 4b illustre un exemple des échanges principaux entre le premier et second terminal dans le cadre du deuxième mode de réalisation de l'invention.

Dans cet exemple, le premier terminal est un terminal fixe 10 et le second terminal un terminal mobile 20.

Ici, au préalable, le premier terminal 10 demande au second terminal 20 sa liste de contacts.

Comme dans l'exemple précédent, le premier terminal 10 émet une commande "AT+RING" lorsqu'il reçoit un appel entrant. Suite à cette commande, le premier terminal 10 vérifie la présence de l'émetteur de l'appel entrant dans la liste de contacts qu'il avait reçue du second terminal 20. En cas de présence, il émet une commande d'émission d'un signal identifiant l'appel entrant.

Comme dans l'exemple précédent, si le second terminal 20 décroche, il émet une commande représentative de cet événement, par exemple la commande "AT+ CLCC", ainsi qu'une commande de transfert d'appel, par exemple la commande "AT+ CCFC".

Ces commandes sont détectées par le premier terminal 10, lequel arrête l'émission du signal identifiant l'appel entrant, et transfère l'appel entrant vers le second terminal 20.

Dans encore un mode de réalisation, lorsque le premier terminal 10 comporte une batterie, et qu'il reçoit une commande lui demandant son niveau de batterie, par exemple une commande "AT+CBC", il informe de son niveau de batterie.

Ainsi, par exemple, si le premier terminal 10 informe que son niveau de batterie est faible, les appels entrant dans le premier terminal 10 sont transférés au second terminal 20 tant que le niveau de batterie est faible ou nul.

## Revendications

1. Procédé de traitement d'un appel entrant mis en oeuvre par un premier terminal (10) associé à un premier numéro d'abonné et par un second terminal (20) associé à un second numéro d'abonné différent du premier numéro d'abonné, une liste de contacts étant associée à chacun desdits premier et second terminaux (10, 20),
le procédé comprenant, suite à la réception (E2) d'un appel entrant par le premier terminal (10), une étape d'émission (E4) par le premier terminal d'une commande informant de la réception de l'appel entrant à destination du second terminal (20), et étant **caractérisé par** la mise en oeuvre des étapes suivantes :
- vérification (E5) si l'appel entrant provient d'un utilisateur faisant partie de la liste de contacts associée au second terminal (20),
- lorsque l'appel entrant provient d'un utilisateur faisant partie de la liste de contacts associée au second terminal (20), mise en oeuvre (E6) par le second terminal (20)d'une commande d'émission d'un signal identifiant ledit appel entrant, de sorte que ledit premier (10) et ledit second terminal (20) émettent simultanément un signal identifiant ledit appel entrant,
- lorsque l'appel entrant ne provient pas d'un utilisateur faisant partie de la liste de contacts associée au second terminal (20), seul le premier terminal (10) émet un signal identifiant ledit appel entrant.

2. Procédé conforme à la revendication 1 mis en oeuvre lorsque l'appel entrant provient d'un utilisateur faisant partie de la liste de contacts associée au second terminal (20), dans lequel lorsque le second terminal (20) accepte l'appel entrant (E8), ledit appel entrant dans ledit premier terminal (10) est transféré vers ledit second terminal (20), et ledit premier terminal (10) met fin à l'émission (E10) d'un signal identifiant ledit appel entrant.

3. Procédé conforme à la revendication 1 mis en oeuvre lorsque l'appel entrant provient d'un utilisateur faisant partie de la liste de contacts associée au second terminal (20), dans lequel lorsque le premier terminal (10) accepte l'appel entrant (E12), ledit second terminal (20) met fin à l'émission (E14) d'un signal identifiant ledit appel entrant.

4. Système de traitement d'un appel entrant par un premier terminal (10) associé à un premier numéro d'abonné et par un second terminal (20) associé à un second numéro d'abonné différent du premier numéro d'abonné, une liste de contacts étant associée à chacun desdits premier et second terminaux (10, 20), l'appel entrant étant reçu dans le premier terminal (10),
- le système comprenant des moyens d'émission par le premier terminal (10) d'une commande informant de la réception de l'appel entrant à destination du second terminal (20), et étant **caractérisé en ce qu'**il comporte : des moyens pour vérifier si l'appel entrant provient d'un utilisateur faisant partie de la liste de contacts associée au second terminal (20),
- des moyens de mise en oeuvre, dans le second terminal (20), d'une commande d'émission d'un signal identifiant ledit signal entrant lorsque l'appel entrant provient d'un utilisateur faisant partie de la liste de contacts associée au second terminal (20), de sorte que ledit premier (10) et ledit second (20) terminal émettent simultanément un signal identifiant ledit appel entrant lorsque l'appel entrant provient d'un utilisateur faisant partie de la liste de contacts associée au second terminal (20) et seul le premier terminal (10) émet un signal identifiant ledit appel entrant lorsque l'appel entrant ne provient pas d'un utilisateur faisant partie de la liste de contacts associée au second terminal (20).

5. Programme d'ordinateur comprenant des instructions pour la mise en oeuvre du procédé selon l'une des revendications 1 à 3 lorsque ce programme est exécuté par un processeur.

## Patentansprüche

1. Verfahren zur Verarbeitung eines eingehenden Anrufs, das von einem einer ersten Teilnehmernummer zugeordneten ersten Endgerät (10) und von einem einer zweiten Teilnehmernummer, die sich von der ersten Teilnehmernummer unterscheidet, zugeordneten zweiten Endgerät (20) durchgeführt wird, wobei jedem der ersten und zweiten Endgeräte (10, 20) eine Liste von Kontakten zugeordnet ist,
wobei das Verfahren nach dem Empfang (E2) eines eingehenden Anrufs durch das erste Endgerät (10) einen Schritt des Sendens (E4), durch das erste Endgerät, eines über den Empfang des eingehenden Anrufs informierenden Befehls an das zweite Endgerät (20) enthält, und durch die Durchführung der folgenden Schritte gekennzeichnet ist:
- Überprüfung (E5), ob der eingehende Anruf von einem Benutzer kommt, der Teil der dem zweiten Endgerät (20) zugeordneten Liste von Kontakten ist,
- wenn der eingehende Anruf von einem Benutzer kommt, der Teil der dem zweiten Endgerät (20) zugeordneten Liste von Kontakten ist, Durchführung (E6), durch das zweite Endgerät (20), eines Sendebefehls eines den eingehenden Anruf identifizierenden Signals, so dass das erste (10) und das zweite Endgerät (20) gleichzeitig ein den eingehenden Anruf identifizierendes Signal senden,
- wenn der eingehende Anruf nicht von einem Benutzer kommt, der Teil der dem zweiten Endgerät (20) zugeordneten Liste von Kontakten ist, sendet nur das erste Endgerät (10) ein den eingehenden Anruf identifizierendes Signal.

2. Verfahren nach Anspruch 1, das durchgeführt wird, wenn der eingehende Anruf von einem Benutzer kommt, der Teil der dem zweiten Endgerät (20) zugeordneten Liste von Kontakten ist, wobei, wenn das zweite Endgerät (20) den eingehenden Anruf annimmt (E8), der im ersten Endgerät (10) eingehende Anruf zum zweiten Endgerät (20) übertragen wird, und das erste Endgerät (10) das Senden (E10) eines den eingehenden Anruf identifizierenden Signals beendet.

3. Verfahren nach Anspruch 1, das durchgeführt wird, wenn der eingehende Anruf von einem Benutzer kommt, der Teil der dem zweiten Endgerät (20) zugeordneten Liste von Kontakten ist, wobei, wenn das erste Endgerät (10) den eingehenden Anruf annimmt (E12), das zweite Endgerät (20) das Senden (E14) eines den eingehenden Anruf identifizierenden Signals beendet.

4. System zur Verarbeitung eines eingehenden Anrufs durch ein einer ersten Teilnehmernummer zugeordnetes erstes Endgerät (10) und durch ein einer zweiten Teilnehmernummer, die sich von der ersten Teilnehmernummer unterscheidet, zugeordnetes zweites Endgerät (20), wobei jedem der ersten und zweiten Endgeräte (10, 20) eine Liste von Kontakten zugeordnet ist, wobei der eingehende Anruf im ersten Endgerät (10) empfangen wird,
- wobei das System Einrichtungen zum Senden, durch das erste Endgerät (10), eines über den Empfang des eingehenden Anrufs informierenden Befehls an das zweite Endgerät (20) enthält, und **dadurch gekennzeichnet ist, dass** es aufweist: Einrichtungen zur Überprüfung, ob der eingehende Anruf von einem Benutzer kommt, der Teil der dem zweiten Endgerät (20) zugeordneten Liste von Kontakten ist,
- Einrichtungen zur Durchführung, im zweiten Endgerät (20), eines Sendebefehls eines das eingehende Signal identifizierenden Signals, wenn der eingehende Anruf von einem Benutzer kommt, der Teil der dem zweiten Endgerät (20) zugeordneten Liste von Kontakten ist, so dass das erste (10) und das zweite (20) Endgerät gleichzeitig ein den eingehenden Anruf identifizierendes Signal senden, wenn der eingehende Anruf von einem Benutzer kommt, der Teil der dem zweiten Endgerät (20) zugeordneten Liste von Kontakten ist, und nur das erste Endgerät (10) ein den eingehenden Anruf identifizierendes Signal sendet, wenn der eingehende Anruf nicht von einem Benutzer kommt, der Teil der dem zweiten Endgerät (20) zugeordneten Liste von Kontakten ist.

5. Computerprogramm, das Anweisungen zur Durchführung des Verfahrens nach einem der Ansprüche 1 bis 3 enthält, wenn dieses Programm von einem Prozessor ausgeführt wird.

## Claims

1. Method for handling an incoming call implemented by a first terminal (10) associated with a first subscriber number and by a second terminal (20) associated with a second subscriber number different from the first subscriber number, a list of contacts being associated with each of said first and second terminals (10, 20),
the method comprising, following the reception (E2) of an incoming call by the first terminal (10), a step of transmission (E4) by the first terminal of a command informing of the reception of the incoming call to the second terminal (20), and being **characterized by** the implementation of the following steps:
- checking (E5) whether the incoming call originates from a user included in the list of contacts associated with the second terminal (20),
- when the incoming call originates from a user included in the list of contacts associated with the second terminal (20), implementing (E6), by the second terminal (20), a command to transmit a signal identifying said incoming call, so that said first (10) and said second (20) terminals simultaneously transmit a signal identifying said incoming call,
- when the incoming call does not originate from a user included in the list of contacts associated with the second terminal (20), only the first terminal (10) transmits a signal identifying said incoming call.

2. Method according to Claim 1, implemented when the incoming call originates from a user included in the list of contacts associated with the second terminal (20), in which, when the second terminal (20) accepts the incoming call (E8), said incoming call in said first terminal (10) is transferred to said second terminal (20), and said first terminal (10) terminates the transmission (E10) of a signal identifying said incoming call.

3. Method according to Claim 1, implemented when the incoming call originates from a user included in the list of contacts associated with the second terminal (20), in which, when the first terminal (10) accepts the incoming call (E12), said second terminal (20) terminates the transmission (E14) of a signal identifying said incoming call.

4. System for handling an incoming call by a first terminal (10) associated with a first subscriber number and by a second terminal (20) associated with a second subscriber number different from the first subscriber number, a list of contacts being associated with each of said first and second terminals (10, 20), the incoming call being received in the first terminal (10),
- the system comprising means for transmission by the first terminal (10) of a command informing of the reception of the incoming call to the second terminal (20), and being **characterized in that** it comprises:
- means for checking whether the incoming call originates from a user included in the list of contacts associated with the second terminal (20),
- means for implementing, in the second terminal (20), a command to transmit a signal identifying said incoming signal when the incoming call originates from a user included in the list of contacts associated with the second terminal (20), so that said first (10) and said second (20) terminals simultaneously transmit a signal identifying said incoming call when the incoming call originates from a user included in the list of contacts associated with the second terminal (20) and only the first terminal (10) transmits a signal identifying said incoming call when the incoming call does not originate from a user included in the list of contacts associated with the second terminal (20).

5. Computer program comprising instructions for implementing the method according to one of Claims 1 to 3 when this program is run by a processor.
